# EUROPEAN PATENT SPECIFICATION

(11) **EP 1 873 619 B1**
(45) Date of publication and mention of the grant of the patent: **15.04.2009**
(21) Application number: 06116223.6
(22) Date of filing: 28.06.2006
(51) Int. Cl.: G06F 3/048, G06F 3/01

(54) **Method and apparatus for dynamically varying one or more properties of an interface element in response to variation in an associated characteristic**
Verfahren und Vorrichtung zur dynamischen Änderung einer oder mehrerer Eigenschaften eines Benutzerschnittstellenelements als Reaktion auf die Änderung einer zugehörigen Eigenschaft
Procédé et appareil de variation dynamique d'une ou plusieurs propriétés d'un élément d'interface, en réponse à une variation dans une caractéristique associée

(43) Date of publication of application: 02.01.2008
(73) Proprietor: Research In Motion Limited, Waterloo, Ontario N2L 3W8 (CA)
(72) Inventor: Scott, Sherryl Lee Lorraine, Toronto, Ontario M5T 1Y9 (CA)
(74) Representative: Rickard, David John

(56) References cited:
- GB-A- 2 328 849
- US-A- 5 420 968
- US-A- 6 147 674
- US-A1- 2002 130 904
- US-A1- 2003 112 269
- US-B1- 6 292 184

## Description

This invention relates to user interfaces. In particular, this invention relates to a method and apparatus for imparting information to a user via a user interface.

Devices having user interfaces are common in myriad applications. For example, personal computers, including desktop workstations and portable or "laptop" computers, are used widely in both business and personal applications. In addition, the hand-held data processing device, commonly known as a "personal digital assistant" or "PDA," is becoming more and more popular, also for use in both business and personal applications.

With the growing use of such devices, there has been an attendant growth in application programs, both for business uses such as controlling industrial processes, accounting etc., and for personal uses such as calendar, contacts database and diary features. In all such applications, a considerable amount of information is imparted to the user in each user interface.

Taking a calendar as an example, a user viewing a week's worth of appointments may be inundated with textual and chart-format information. In conventional systems this information is organized for maximum usability, in a calendar, for example, by displaying columns representing days of the week and individual cells within the columns representing time slots within each day, each labelled for easy identification by the user. However, a calendar is a simple example; in more complex applications, the amount of information imparted to the user can be overwhelming.

In a user interface such as a display, display elements are used to represent objects, events or data structures. It is known to vary a property of the display elements, for example colour, to highlight or distinguish between components of the visual display representing objects, events or data structures having different characteristics. It is known in a calendar, for example, to use one colour for cells representing hours during the business day and another colour for cells representing hours outside the business day. This tends to emphasize the information that, for business users, is most pertinent. Similarly, it is known to use different colours in alternate columns in an accounting spreadsheet, to enable the user to more readily distinguish between columns and avoid confusion. This use of colour may also serve the function of rendering a user interface visually appealing, but its primary purpose is to highlight the most relevant data or distinguish between objects, events or data structures.

Colour has also been used to represent changes in a variable, for example in U.S. Patent No. 6,292,184 issued September 18, 2001 to Morgan, which uses the colour attributes hue, luminance and saturation to convey information to a user to represent variation in time lines in a medium being edited. However, in such a system the medium being edited is fixed in relation to media sources and timelines, so that once a colour attribute is assigned a particular value to represent a particular source or position on the timeline, that value remains unchanged. US2003/0112269 discloses a graphic indicator for resources and events in a computing environment, which is updated and altered visually in response to changes in monitored information regarding the properties of resources and events coupled to a computing environment. US5420968 discloses a rendered object (for example an airplane graphic representing an airplane on an air traffic control display) which has attributes (colour and shape) that change between one of two states as the state of a corresponding characteristic of the represented object (for example it's position) changes. US 2002/130904 discloses graphical indexing elements having characteristics which indicate the status of associated messaging sessions as engaged or non-engaged.

PDA devices are somewhat unique to the extent that they not only provide a video interface for conveying information to the user, but may also provide an audible interface (e.g. a tone generator or voice synthesizer) and a tactile interface (e.g. a vibrator), each of which is capable of imparting information to the user through sensory stimulation. In these non-visual types of user interfaces, the audible notification (providing an auditory indication of a particular event, such a telephone signalling an incoming call) or a vibrating notification (providing a tactile indication of a particular event, such as a mobile communications device signalling an incoming message), the properties of the notifying sound (pitch, loudness, dynamic range, duration) or vibration (strength, pulse rate, duration) can be varied to represent differences in the characteristics of the represented event, for example the urgency of an incoming message. However, some characteristics of an object, event or data structure are dynamic, and those types of characteristics by definition change over time. Conventional user interfaces do not have any means of indicating variation in the characteristics of the object, event or data structure based on the properties of the associated indicator.

### Brief Description of the Drawings

In drawings which illustrate by way of example only a preferred embodiment,
Figure 1A is a display interface in the form of a calendar using colour contrasts to improve visual differentiation between different pieces of information;
Figure 1B is a display interface of the calendar of Figure 1A using a dynamic colour change to indicate a temporal relation between a selected piece of information and surrounding information;
Figure 1C is a display interface of the calendar of Figure 1B using a colour change to distinguish more relevant information from less relevant information;
Figure 2A is a display interface of a calendar using both colour contrasts to differentiate past events from future events and a dynamic colour change to indicate a temporal relation between selected pieces of information;
Figure 2B is a display interface of the calendar of Figure 2A showing a later date as the "current" date;
Figure 2C is a display interface in the form of a message list using dynamic colour fading to indicate the aging of older messages;
Figure 3 is a schematic diagram of an apparatus embodying a visual embodiment of the invention;
Figure 4 is a schematic diagram of an apparatus with an audible user interface;
Figure 5 is a schematic diagram of an apparatus with a tactile user interface;

### Description of Preferred Embodiments

It would accordingly be advantageous to provide a system and method for using properties of visual, auditory or tactile stimuli, for example colour, sound or vibration, dynamically, to impart information about changes in variable characteristics in a dynamic system which change, for example, with respect to time, altitude, depth, distance or with respect to any other variable that might be utilized in a particular environment or application. The indicator, which may be visual (such as a graphic icon or text string), auditory (such as the sound of a bell), or tactile (such as a vibration), is presented or "rendered" with certain properties, one or more of which represent one or more dynamic characteristics of the represented object, event or data structure. As will be described herein, each property representing a dynamic characteristic is varied with changes in the characteristic, either incrementally or continuously, to thus provide an immediate indication of the change in the dynamic characteristic.

The invention thus preferably provides a method as claimed in claim 1.

The invention further preferably provides an apparatus as claimed in claim 5.

The present disclosure describes an apparatus and method for the dynamic use of visual stimuli to impart information in a user interface. In the case of a visual stimulus, for example, a component 22 of a video display that represents an object, event or data structure having a dynamic characteristic, i.e. a characteristic which varies over time, can be assigned a colour. The colour is a variable property of the component 22, and in accordance with the one embodiment, the colour is varied as the dynamic characteristic changes, such that it becomes immediately apparent in a user interface 10 displaying a set 20 of such components 22 how the characteristic differs from one component 22 relative to other components 22 in the set 20 of components 22.

In the case of a visual stimulus or indicator, this is accomplished by applying to at least one component 22 in a set 20 displayed on a visual interface 10, a colour, the colour representing a state of the dynamic characteristic in the component 22; detecting or calculating a variation in the state of the dynamic characteristic in the component 22; and in response the colour to reflect the variation in the dynamic characteristic.

It will be appreciated that "colour" can be defined in many ways, for example in terms of human perception, pigments used in paint, collections of wavelengths of light, or "colour spaces". Arguably the most famous colour space for the purposes of video displays is RGB space, so named because each displayable colour is represented by the red, green and blue components (each often, but not necessarily, specified as having integer values in a range from 0 to 255) that, when added together, create the colour of a pixel on the display. The RGB colour space, though well-adapted to the needs of a display system, does not always conform to human expectations for a colour system. For example, adding pure red and pure green yields yellow, and the "midpoint" between pure red and green is a very dingy shade of yellow.

It is well known in the art that there are many other colour spaces for defining colours, typically by means of three coordinates, and formulas for mapping one space to another. A system known to many who use popular graphics programs such as *Photoshop*^{™} is HSL space, in which the coordinates represent hue, saturation and luminance. Hue is measured on a circular scale corresponding to the additive colour wheel (red, yellow, green, cyan, blue, magenta). Saturation is zero for grey tones (i.e. colours having all RGB components equal) and reaches the maximum value for colours having at least one RGB component equal zero. Luminance is related to the perceived brightness of the colour, but in an inconsistent manner; for example, yellow and blue have the same luminance. There are related systems such Hue-Saturation-Value and Hue-Saturation-Brightness.

A more faithful representation of perceived brightness is found in the Y coordinate (also called luminance) of YUV space, one version of which is used in the JPEG image compression scheme. In the absence of the two chrominance coordinates U and V, pixel-by-pixel luminance information alone is all that is needed to form a blank-and-white, i.e. grey-tone, version of an image.

In varying colours to represent changes in the state of a dynamic characteristic, it is frequently advantageous-both conceptually and from a programming standpoint-to represent and transform the colours in HSL or YUV space, even though a conversion of colour coordinates to RGB values will ultimately be needed to drive a video display. As one example, a simple rotation of a hue from one value to another may involve first increasing one of the primary additive colours (red, blue and green) and then decreasing a different one. As another example, "greying-out" a graphic image by decreasing the saturation of each of its pixels typically requires simultaneously changing all three RGB values for each pixel.

Transparency, though not a coordinate in any of the aforementioned colour spaces, can nevertheless be exploited as an aspect of an image for the purposes of varying a property of a visual component. Transparency of one (foreground) image is only perceived in relation to another (background) image; the background need not be apparent as surrounding the foreground image. Methods for increasing the perceived transparency of a graphic will be described later in Example 2.

Similarly, contrast is not a coordinate in any of the aforementioned colour spaces, but it is a perceived aspect of an image. The contrast of an image is higher when colours within the image are perceived as being more dissimilar and lower when they are more alike. As such, the perceived contrast of a graphic or between text and background can be used as a variable property of a visual component.

The visual embodiments can be applied to any variable property of any component 22 capable of being rendered in a visual user interface 10. The component 22 displayed on the visual interface 10 may be an indicator representing a tangible object, such as a vehicle or a projectile; an intangible object, such as a day of the week or a temperature; an event, such as an explosion or earthquake; a data structure, such as expense or revenue; or any other object, event or data structure having at least one dynamic characteristic.

Other examples can be applied to other sensory stimuli. For example, in an auditory example a text reader (e.g. voice synthesizer) could read email messages aloud; for new messages the text would be read loudly, for older messages more softly. Of even greater effect would be to vary the volume or pitch of sound reflecting priority; for example, a message marked "urgent" could be read loudly with more pronounced intonation, while a normal message could be read at a lower volume with regular intonation. Any one or a combination of loudness, pitch or rate (repetition rate for a tone, or speech rate for a synthesized voice, for example) of a sound can serve as variable properties that can be varied responsive to a change in the dynamic characteristic of the object, event or data structure.

Similarly in the case of a tactile example the strength, continuity or character of the stimulus can be varied in proportion to the variation in the dynamic characteristic. In this case the rendered indicator may be a vibration, and a mobile communications device, for example, could vibrate more strongly or rapidly when a message marked "urgent" is received than when any other message is received. Different stimuli may be combined: A visual change could be accompanied by a change in audio, for example; as the icon representing the level of power in a battery decreases (to indicate that power is running out), the volume or pitch of an accompanying battery indicator sound decreases (or increases to indicate an approaching alarm condition).

The various embodiments thus provide an apparatus and method for the dynamic use of a visual, indicator (stimulus) to impart information about a corresponding object, event or data structure. At least one variable property of the rendered indicator - for example colour in the case of a visual indicator, - is mapped to the dynamic characteristic of the object, event or data structure. Changes in the dynamic characteristic of the object, event or data structure are accordingly represented as changes in the associated variable property of the rendered indicator.

A first visual embodiment of the invention uses colour differences to impart information in a user interface. According to the invention, a component 22 of the visual display 4 which represents an object, event or data structure having a dynamic characteristic which varies over time (for example time elapsed since a specific date, the distance of a moving object from a reference point, barometric pressure, the altitude of an aircraft, etc.) is rendered with a colour. The colour is varied as the dynamic characteristic in the object, event or data structure changes, such that it becomes immediately apparent to a user of a user interface displaying a plurality of like components how the characteristic differs from one component relative to the others. It will be appreciated that a "component" as used herein comprises anything displayed visually in a user interface, whether graphic, textual (including alphanumeric symbols and other symbols) or a combination thereof.

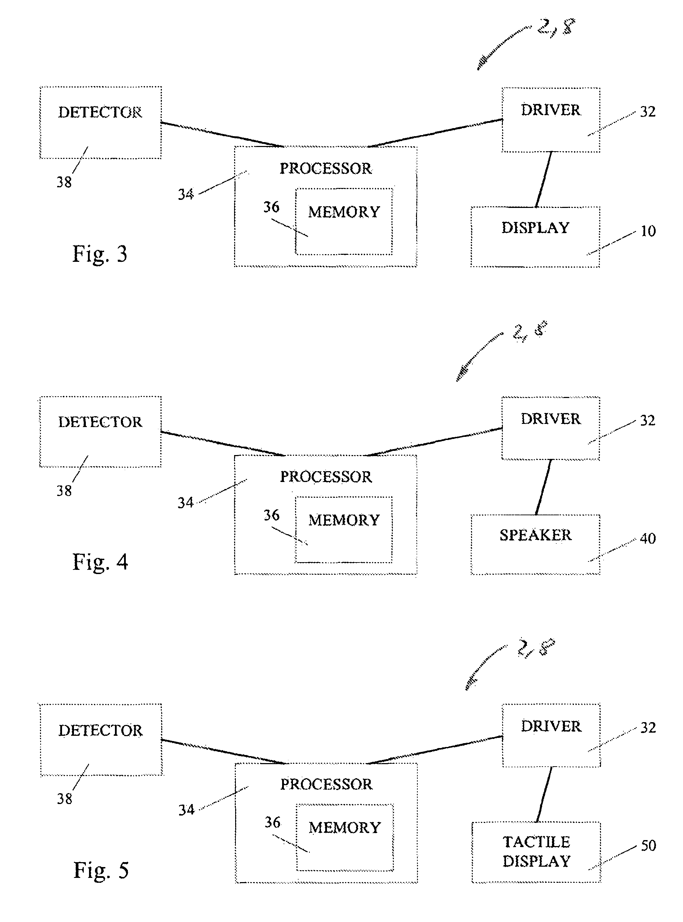

In the visual embodiment of the invention, illustrated in Figure 3, an apparatus according to the invention comprises a visual display 10 for displaying the set 20 of components 22, each component 22 representing an object, event or data structure having at least one dynamic characteristic. The display 10 may for example be a video monitor in the case of a computer 2, or an LCD screen in the case of a personal digital assistant (PDA) or hand-held communications device 8. The apparatus comprises a memory 36 storing a video driver 32 for operating the display, and in particular for applying a colour to one or more components 22 in the set 20. The colour is generated by the driver 32 applying specific values red, green and blue to a group of pixels forming the component on the user interface 10. The selected colour assigned to the component 22 represents the state of a dynamic characteristic of the object, event or data structure, the various different states of the dynamic characteristic being represented by different colours, varied incrementally for each different state of the dynamic characteristic or continuously over a range of states of the dynamic characteristic.

In the apparatus according to the invention a processor 34, which may be a central processing unit (CPU), a microprocessor, an application specific integrated circuit (ASIC) or any other type of processing device, determines the variation in the state of the dynamic characteristic in the object, event or data structure. This can be accomplished by sending to the processor 34 a signal from a detector (e.g. an altimeter, a barometer, electricity meter, etc., not shown), or by the processor 34 (or a separate processor, not shown) calculating the value with reference to a fixed value, for example where the dynamic characteristic being conveyed is the passage of time. The processor 34 controls the video driver 32, which varies one or more of the hue, luminance and saturation of the component 22 to generate the colour (combination of hue and perceived brightness) that represents the current state of the dynamic characteristic of the object, event or data structure, for example by fetching from a lookup table hue, luminance and saturation values corresponding to the state of the dynamic characteristic.

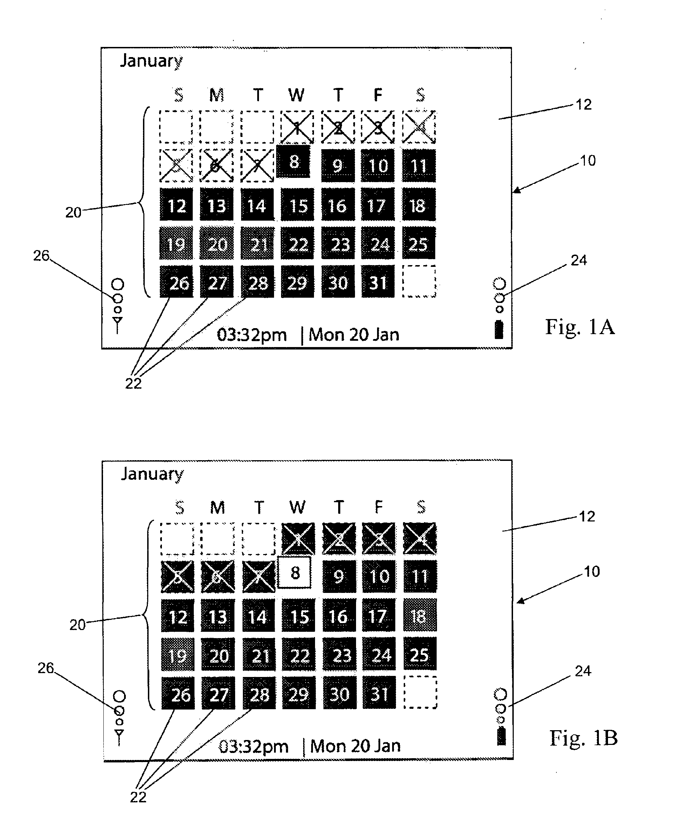

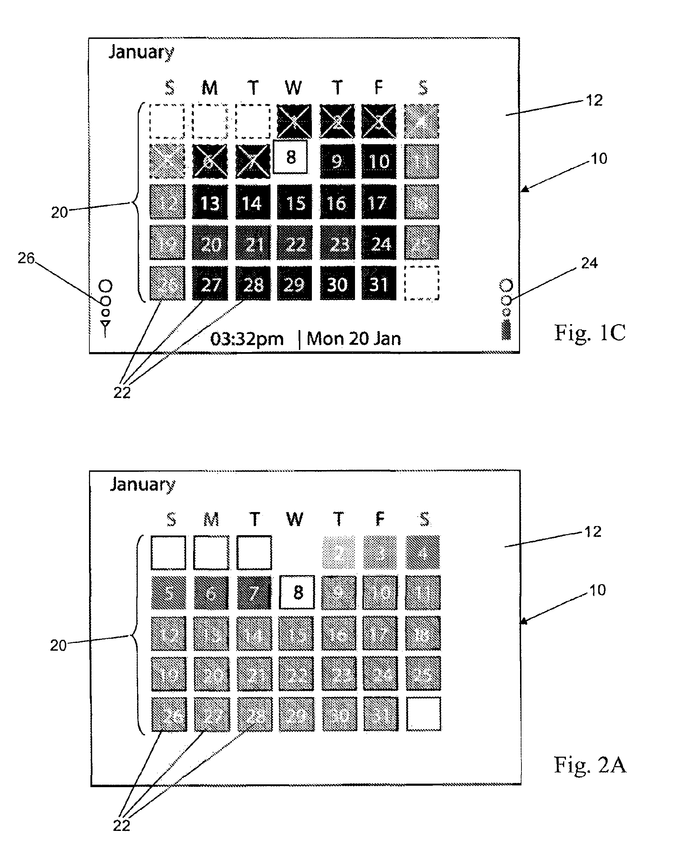

Figures 1A to 1C show the example of a calendar 10 having a visual interface comprising a background 12, generally having fixed graphic and/or textual indicia, in the example shown a title (e.g. the month name), and column headings representing days of the week. A set 20 of variable components 22, also conveying information by means of graphic or textual indicia, overlays the background 12. The components 22 may be representative of any information, in the example shown days of the week, and may be presented in any graphic or text form.

Colours for the background 12 and fixed graphic and/or textual indicia are selected as desired for aesthetics, contrast, emphasis or such other considerations as may be relevant to the conveyance of the information. According to one embodiment, a colour is applied to at least some variable components 22 in the set of components 20 displayed on the interface 10. The colour is a variable property of the rendered component 22 and represents a state of the dynamic characteristic in the object, event or data structure represented by the component 22. Furthermore, it will be appreciated that the property of the component 22 arises in relation to a predetermined parameter. In the example given, the component 22 itself represents a fixed point in time (a specific day); however, although the day labelled "15" will always be labelled "15," the dynamic characteristic of the event - in this case the time since or until the current date - is variable and represented by the variable property (colour) of the component 22. In other words, the event possesses a dynamic characteristic that arises from its relation to the current date, because the time span between the event date and the current date changes as time passes, and this is represented by variation of the variable property (colour) in the component 22 used to represent the event.

The variation in the state of the dynamic characteristic that is represented by the variable property of the component 22 in the set 20, in this case time span between the date represented by the component 22 and the current date, is determined by any means suitable to the parameter under consideration. In the context of a calendar on a computer, for example a personal computer (PC), this is a simple calculation for the processor 34. In the case of a display showing the altitude of an aircraft, the determination would be made by a processor receiving input from an altimeter detecting the altitude of the aircraft relative to the ground; in the case of a display showing air pressure, the determination would be made a processor receiving input from by a barometer and compared to, for example, one atmosphere; and so on. In each case the current state of the dynamic characteristic is determined and compared to a fixed reference to derive a value for the variable property, in this case colour, to be applied to the display component 22.

A particular colour is thus associated with the determined value of the dynamic characteristic of the object, event or data structure, which may for example be retrieved from a lookup table stored in the memory 36. The processor 34 then assigns a colour to the component 22 based on the current value of the dynamic characteristic. The colour may be varied incrementally, for example a group of components 22 within the set 20 (e.g. all the days in the third row) may be assigned the same colour, and all will be changed simultaneously to a new colour when a next threshold of the dynamic characteristic is reached (for example, the next week on the calendar).

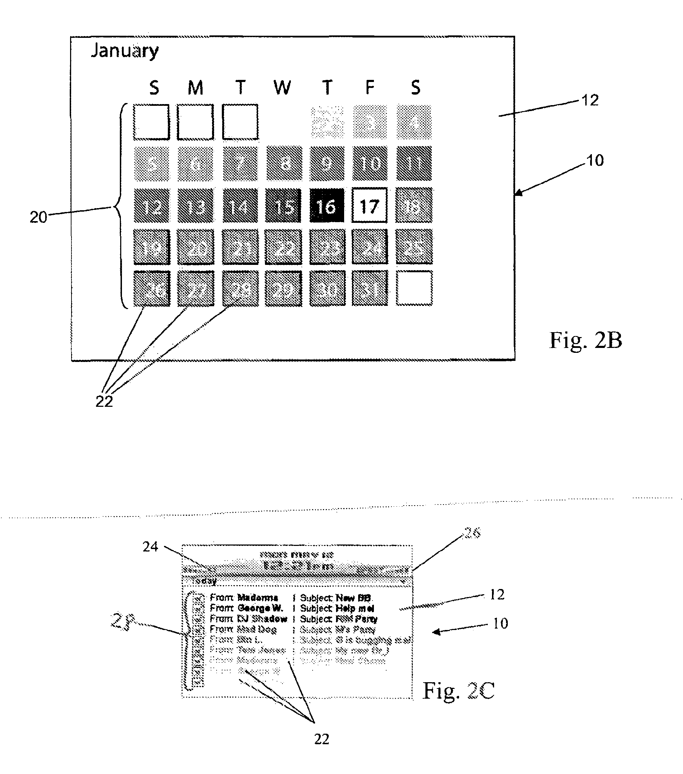

In other cases the colour may be specific to each component 22, as in the example of a message list shown in Figure 2C in which a different colour is applied to each text component 22 in the list of email messages 20 based on the different current value of the dynamic characteristic associated with each component 22, in this case the aging of the message (i.e. time elapsed since the message was received). As messages get older (and presumably less relevant), the component 22 that represents the message becomes increasingly faded by consistently changing the colour(s) of the text or icon into the colour(s) of the background. In this case, changes in the different components can also be used to convey different information; for example, the text component 22 relaying the message can fade as just described to indicate the age of the message while the hue of the icon component 22 associated with the message can be changed according to the priority of the message. Each component 22 presents an opportunity to convey information about a different dynamic characteristic of the object, event or data structure represented by the component 22.

In this fashion, one or both of the hue and perceived brightness is varied in relation to the variation in the dynamic characteristic, in a manner which is visibly discernable to the user, so that the user interface instantly imparts relative information relating to the state of the dynamic characteristic related to each variable component 22, or the relative state of the dynamic characteristic of that component 22 in relation to other components 22 in the set 20. The colour(s) of a graphic may be changed, as for example in the components 22 in Figures 1A to 1C, or the colour of text imparting information can be changed, as for example in the components 22 in Figures 2A, 2B and 2C. Thus, in the visual embodiment, colour is used help the viewer to focus on the most relevant information in the user interface 10.

Although it is possible to assign arbitrary colours to the different states of the dynamic characteristic, it may be desirable to vary the colour in relation to the variation in the dynamic characteristic, and this provides a more logical mental mapping of the current state of the dynamic characteristic (which will typically be near other components 22 in the set 20 having different states). For example, Figures 2A and 2B illustrate a calendar page in which the background of the icons representing the days of the month is a variable component 22. In Figure 2A the "current date" is the 8^{th} day of the month. The "current date" is distinguishable by unique background and text colours, but the dynamic characteristic (the temporal relation of the "current date" to past dates) is also distinguishable by the variable property (the degree of fading of the day icon background) as the date in the past gets further from the "current date." Figure 2B illustrates the same thing, but with the "current date" as the 17^{th} day of the month.

Figure 2C illustrates this concept applied to a set of email messages 28. As new messages are received, or alternatively as the time since receipt of a message elapses, the indicator for the older messages (in this case the text of the "From" and "Subject" lines) fades, providing an immediate visual indication of the aging of the message relative to other messages in the set 28.

In further embodiments, rather than using fading as a variable property to indicate the change in the dynamic characteristic (in this case time elapsed), it is equally possible to use a change in contrast, colour, transparency, size or any other visually variable property or combination thereof.

The component 22 may be a graphic formed from a plurality of colours, and in this case the individual parts of the graphic may be differentially varied (for example in the case of a day on the calendar, the border can be varied while leaving the interior of the border unchanged). Alternatively, all the colours in the different parts of the graphic may be varied together by darkening, lightening, desaturating or tinting all pixels of the graphic in a consistent manner. It will be appreciated in this regard that the colours for a graphic rendering may be advantageously selected such that the particular manner of consistently varying the pixel colours still allows the user to distinguish between different portions of the graphic as the different parts of the graphic change.

Homescreen elements representing dynamic characteristics in a personal digital assistant or hand-held communications device, such as power (full vs. critically low), GPRS connection strength and so on, may use a single manner of colour variation to uniformly indicate the states of the different dynamic characteristics. For example, as battery power fades, so does the graphic icon 24 representing the battery on a PDA display 6; as the GPRS connection fades, so does GPRS icon 26, and so on. Alternatively, different dynamic characteristics may have their respective states indicated by different manners of colour variation, as may be desirable if the states of the different dynamic characteristics are not analogous to one another.

Once the value of the dynamic characteristic has been detected, it can be applied to change the colour of the component 22 by any suitable means. Examples of how the value of the dynamic characteristic is applied to change the colour(s) of the component are as follows:

### Example 1 - Value-based visual indication: colour hue associated with battery level

In this example, the colours of a battery charge level meter icon change in relation to the level. At all times, the colours of the icon's pixels all have the same or nearly the same hue (or chrominance). That hue is green at a battery level at 100%, red at 10% or lower, and somewhere "between" green and red when the battery level is between 100% and 10%. The continuous progression of hues may follow the cycle of hues associated with an additive colour wheel (red, yellow, green, cyan, blue, magenta) or may follow the cycle of hues associated with a subtractive colour wheel (red, orange, yellow, green, blue, purple). The progression most common in the user's past experience with warnings is likely to be from green to yellow to orange to red.

### Example 2 - Time-based visual indication: opacity associated with temporal proximity

In this example, an appointment list is rendered on the screen as pixels of various colours. The colours for each appointment change in relation to the appointment's distance in time from the present. Each pixel for a particular appointment has a base colour, which is displayed when the appointment's time is the current time. At a fixed time in the past and in the future, all pixels of said appointment become a specific target colour (possibly one target colour for the past and another for the future).

In between the current time and one of the threshold times, each pixel is a mixture of X% base colour and (100-X)% target colour; the mixture is obtained by adding the percentages of the respective RGB components of the two colours. If the target colour always appears in an area surrounding the rendering of the appointment, then pixels of that rendering may be perceived as fading into the target-coloured background as the appointment moves farther in the past or future; the opacity of the appointment rendering decreases until the rendering vanishes. Otherwise, the target colour may be perceived as a transparent "film," which thickens as the appointment moves farther in the past or future; the opacity of the film increases until the film totally obscures the appointment rendering. In other words, the perception of "what's on top" depends on context. It will be obvious to the person of ordinary skill in the art that an alternative approach to conveying transparency, more appropriate for incremental changes, is to intermix X% pixels of the base colour and (100-X)% pixels of the target colour rather than adjusting the colour of each pixel on a graphic image.

Two special cases are of note. When all colours move consistently toward a target colour of white, they uniformly lighten, i.e., increase in perceived brightness. When all colours move consistently toward a target colour of black, they uniformly darken, i.e., decrease in perceived brightness.

### Example 3 - Value-based visual indication: colour saturation associated with GPRS signal strength level

In this example, the colours of a GPRS signal strength level meter icon change in relation to the level. At maximum GPRS signal strength, each pixel of the icon has a base colour which is fully saturated, meaning that at least one of its three RGB components is nil. When no signal is present, the pixel colour is fully desaturated ("decolourized"), meaning that the three RGB components are equal, making the pixel a target shade of grey. The target shade of grey has the same "lightness" or perceived brightness as the base colour, as measured by any of the standard measures of brightness or luminance; the same such measure is applied to all pixels, so that the decolourized (no-signal) icon is recognizable as a black-and-white version (more properly called a grey-tone version) of the fully saturated (maximum-strength) icon. In between maximum strength and no signal, the colour of each pixel is a mixture of its base and target colours, just as described in Example 2. As with Example 2, mixing pixels of the base and target colours is an alternate approach.

In all three examples the variation in the colours of the component 22 is "directional," i.e. each pixel colour is moved from a base colour toward a target colour in relation to a quantifiable piece of information, but the colour movement need not be proportional to the quantity change. Direct proportionality is generally not optimal due to the nature of human visual perception. The eye's response to light is logarithmic, not linear; therefore, equal increments or decrements in light energy are not perceived as equal steps in brightness/luminance. Moreover, of the three primary additive colours (red, green, and blue), human eyes are most receptive to green light and least receptive to blue light; therefore, equal increments or decrements in hue (achieved by incrementing or decrementing one of the three primary colours) are not perceived as equal steps around a colour wheel.

In all three examples, the common theme is that the colours of all pixels within a component move continuously and gradually in a consistent "direction" spanning at least one dimension (e.g. hue, saturation or brightness/luminance) of some colour space; the "colour paths" are not necessarily "straight lines" (see Example 1), and they may converge toward a single colour (see Example 2) or lead to distinct colour destinations (see Example 3). The movement is always tied to a quantifiable piece of information associated with the component, but the linkage between colour movement and quantity change is not necessarily a linear relationship.

As was mentioned earlier, in a visual embodiment, varying a dynamic property of a component may alternatively be done in a non-continuous manner, wherein there are one or more thresholds for the state of a dynamic characteristic, and the corresponding dynamic property is changed by a discrete increment each time a respective threshold is reached. This approach would be especially appropriate when the desired result is a progression of colours mimicking a sequence that would be found on the traditional subtractive colour wheel of common experience (red-orange-yellow-green-blue-purple). Such a progression (as exemplified by Example 1) does not correspond to an easily computed path within one of the usual colour spaces. By changing colours in discrete steps, a simple lookup table can be used instead of a complex computation, as will be obvious to one of ordinary skill in the art.

These are merely examples of the manner in which the invention can be applied to specific visual indicators. The invention can be equally applied to myriad other visual indicators, and any desired combination thereof with auditory and tactile sensory indicators. An apparatus with an audible aspect having a speaker 40 for rendering an audible indicator is illustrated in Figure 4, and an apparatus with a tactile aspect having a tactile display 50 (for example a vibrating device) for rendering a tactile indicator is illustrated in Figure 5.

Various embodiments of the present invention having been thus described in detail by way of example, it will be apparent to those skilled in the art that variations and modifications may be made without departing from the invention. The invention includes all such variations and modifications as fall within the scope of the appended claims.

## Claims

1. A method of imparting to a user information regarding a state of at least one dynamic characteristic of each object, event or data structure of a set of objects, events or data structures, the at least one dynamic characteristic having different discrete states or a range of states, respective ones of said set of objects, events or data structures being represented by respective components (22) in a set (20) of like components rendered on a visual interface (10) ordered according to the at least one dynamic characteristic, each object, event or data structure having a different current value of the dynamic characteristic, the method comprising:
applying to each component (22) in the set (20) of like components at least one variable property representing the state of the dynamic characteristic,
determining a variation in the state of the dynamic characteristic for each object, event or data structure,
varying the at least one variable property for each object, event or data structure in response to the variation in the state of the dynamic characteristic represented, wherein the varying is done continuously over the range of states or incrementally for each different discrete state of the dynamic characteristic in response to the variation in the state of the dynamic characteristic represented, each increment being in response to the reaching of a respective threshold by the state of the dynamic characteristic represented; and
rendering said varying the at least one variable property on the visual interface (10).

2. The method of claim 1, wherein the determining comprises detecting or calculating a value of the state of the dynamic characteristic.

3. The method of claim 1 or claim 2, wherein the component (22) comprises a plurality of pixels, and the at least one variable property comprises the colours of at least some of the pixels.

4. The method of claim 3, wherein the varying comprises at least one of changing the hue of each of said at least some of the pixels, changing the saturation of each of said at least some of the pixels, changing the brightness of each of said at least some of the pixels, changing the transparency of each of said at least some of the pixels, and/or changing the contrast among at least some of the pixels.

5. An apparatus (2, 8) for imparting to a user information regarding a state of at least one dynamic characteristic of each object, event or data structure of a set of objects, events or data structures, the at least one dynamic characteristic having different discrete states or a range of states, each object, event or data structure having a different current value of the dynamic characteristic, the apparatus comprising:
a visual interface (10) for rendering representations of respective ones of said set of objects, events or data structures as respective components (22) in a set (20) of like components ordered according to the at least one dynamic characteristic, the state of the dynamic characteristic being represented by at least one variable property of each component (22) in the set (20) of like components, and
at least one processor (34) for determining a variation in the state of the dynamic characteristic for each object, event or data structure, and varying the at least one variable property for each object, event or data structure in response to the variation in the state of the dynamic characteristic represented, wherein the processor (34) is arranged to perform the varying continuously over the range of states or incrementally for each different discrete state of the dynamic characteristic in response to the variation in the state of the dynamic characteristic represented, each increment being in response to the reaching of a respective threshold by the state of the dynamic characteristic represented, and
the visual interface (10) further being arranged for rendering said varying the at least one variable property on the visual interface.

6. The apparatus of claim 5, further comprising a detector (38), wherein the processor (34) is arranged to receive a signal from the detector for detecting the variation in the state of the dynamic characteristic of the object.

7. The apparatus of claim 5, wherein the processor (34) is arranged to calculate the variation in the state of the dynamic characteristic of the object.

8. The apparatus of any one of claims 5 to 7, wherein the component (22) comprises a plurality of pixels, and the at least one variable property comprises the colours of at least some of the pixels.

9. The apparatus of claim 8, wherein the processor (34) is arranged to vary any one or any combination of the hue of each of said at least some of the pixels, changing the saturation of each of said at least some of the pixels, changing the brightness of each of said at least some of the pixels, changing the transparency of each of said at least some of the pixels, and/or changing the contrast among at least some of the pixels.

10. A computer program product for imparting to a user information regarding a state of at least one dynamic characteristic of each object, event or data structure of a set of objects, events or data structures, each object, event or data structure being represented by a component in a set (20) of like components rendered on a visual interface (10), said computer program product comprising a computer readable medium (36) embodying program code executable by a processor of a computing device (2, 8) for implementing the method of any one of claims 1 to 4.

## Patentansprüche

1. Verfahren, um an einen Benutzer Informationen zu übermitteln, die einen Zustand mindestens eines dynamischen Merkmals jedes Objekts, Ereignisses oder jeder Datenstruktur einer Gruppe von Objekten, Ereignissen oder Datenstrukturen betreffen, wobei das mindestens eine dynamische Merkmal verschiedene diskrete Zustände oder einen Bereich von Zuständen hat, wobei jeweilige der Gruppe von Objekten, Ereignissen oder Datenstrukturen durch entsprechende Komponenten (22) in einer Gruppe (20) von gleichartigen Komponenten dargestellt werden, die auf einer visuellen Schnittstelle (10) gemäß dem mindestens einen dynamischen Merkmal geordnet angezeigt werden, wobei jedes Objekt, Ereignis oder jede Datenstruktur einen anderen aktuellen Wert des dynamischen Merkmals hat, und wobei das Verfahren umfasst:
Anwenden mindestens einer variablen Eigenschaft, die den Zustand des dynamischen Merkmals repräsentiert, auf jede Komponente (22) in der Gruppe (20) gleichartiger Komponenten,
Bestimmen einer Abweichung des Zustands des dynamischen Merkmals für jedes Objekt, Ereignis oder jede Datenstruktur,
Ändern der mindestens einen variablen Eigenschaft für jedes Objekt, Ereignis oder jede Datenstruktur als Reaktion auf die Änderung des Zustands des repräsentierten dynamischen Merkmals, wobei das Ändern kontinuierlich über den Bereich von Zuständen oder inkrementell für jeden diskreten Zustand des dynamischen Merkmals erfolgt, als Reaktion auf die Änderung des Zustands des repräsentierten dynamischen Merkmals, wobei jede inkrementelle Änderung die Reaktion darauf ist, dass der Zustand des repräsentierten dynamischen Merkmals einen entsprechenden Schwellwert erreicht; und
Anzeigen der Änderung der mindestens einen variablen Eigenschaft auf der visuellen Schnittstelle (10).

2. Verfahren nach Anspruch 1, wobei das Bestimmen umfasst, einen Wert des Zustands des dynamischen Merkmals zu erkennen oder zu berechnen.

3. Verfahren nach Anspruch 1 oder Anspruch 2, wobei die Komponente (22) eine Mehrzahl von Bildpunkten umfasst und die mindestens eine variable Eigenschaft die Farben von mindestens einigen der Bildpunkte umfasst.

4. Verfahren nach Anspruch 3, wobei das Ändern mindestens eins aus der Gruppe von Ändern des Farbtons jedes der mindestens einigen Bildpunkte, Ändern der Farbsättigung jedes der mindestens einigen Bildpunkte, Ändern der Helligkeit jedes der mindestens einigen Bildpunkte, Ändern der Transparenz jedes der mindestens einigen Bildpunkte und/oder Ändern des Kontrasts zwischen mindestens einigen der Bildpunkte umfasst.

5. Vorrichtung (2, 8), um an einen Benutzer Informationen zu übermitteln, die einen Zustand mindestens eines dynamischen Merkmals jedes Objekts, Ereignisses oder jeder Datenstruktur einer Gruppe von Objekten, Ereignissen oder Datenstrukturen betreffen, wobei das mindestens eine dynamische Merkmal verschiedene diskrete Zustände oder einen Bereich von Zuständen hat, wobei jedes Objekt, Ereignis oder jede Datenstruktur einen anderen aktuellen Wert des dynamischen Merkmals hat, und wobei die Vorrichtung umfasst:
eine visuelle Schnittstelle (10) zum Anzeigen von Darstellungen jeweiliger der Gruppe von Objekten, Ereignissen oder Datenstrukturen als entsprechende Komponenten (22) in einer Gruppe (20) von gleichartigen Komponenten, die gemäß dem mindestens einen dynamischen Merkmal geordnet sind, wobei der Zustand des dynamischen Merkmals durch mindestens eine variable Eigenschaft jeder Komponente (22) in der Gruppe (20) von gleichartigen Komponenten repräsentiert wird, und
mindestens einen Prozessor (34), um eine Änderung des Zustands des dynamischen Merkmals für jedes Objekt, Ereignis oder jede Datenstruktur festzustellen, und die mindestens eine variable Eigenschaft für jedes Objekt, Ereignis oder jede Datenstruktur zu ändern als Reaktion auf die Änderung des Zustands des repräsentierten dynamischen Merkmals, wobei der Prozessor (34) dafür ausgelegt ist, die Änderung kontinuierlich über den Bereich von Zuständen oder inkrementell für jeden diskreten Zustand des dynamischen Merkmals auszuführen, als Reaktion auf die Änderung des Zustands des repräsentierten dynamischen Merkmals, wobei jede inkrementelle Änderung die Reaktion darauf ist, dass der Zustand des repräsentierten dynamischen Merkmals einen entsprechenden Schwellwert erreicht; und
wobei die visuelle Schnittstelle (10) ferner dafür ausgelegt ist, die Änderung der mindestens einen variablen Eigenschaft auf der visuellen Schnittstelle anzuzeigen.

6. Vorrichtung nach Anspruch 5, ferner umfassend einen Detektor (38), wobei der Prozessor (34) dafür ausgelegt ist, ein Signal von dem Detektor zu empfangen, um die Änderung des Zustands des dynamischen Merkmals des Objekts zu erkennen.

7. Vorrichtung nach Anspruch 5, wobei der Prozessor (34) dafür ausgelegt ist, die Änderung des Zustands des dynamischen Merkmals des Objekts zu berechnen.

8. Vorrichtung nach einem der Ansprüche 5 bis 7, wobei die Komponente (22) eine Mehrzahl von Bildpunkten umfasst und die mindestens eine variable Eigenschaft die Farben mindestens einiger der Bildpunkte umfasst.

9. Vorrichtung nach Anspruch 8, wobei der Prozessor (34) dafür ausgelegt ist, ein beliebiges oder eine beliebige Kombination von Farbton jedes der mindestens einigen Bildpunkte, Ändern der Farbsättigung jedes der mindestens einigen Bildpunkte, Ändern der Helligkeit jedes der mindestens einigen Bildpunkte, Ändern der Transparenz jedes der mindestens einigen Bildpunkte und/oder Ändern des Kontrasts zwischen mindestens einigen der Bildpunkte zu ändern.

10. Computerprogrammprodukt, um an einen Benutzer Informationen zu übermitteln, die einen Zustand mindestens eines dynamischen Merkmals jedes Objekts, Ereignisses oder jeder Datenstruktur einer Gruppe von Objekten, Ereignissen oder Datenstrukturen betreffen, wobei jedes Objekt, Ereignis oder jede Datenstruktur durch eine Komponente in einer Gruppe (20) von gleichartigen Komponenten repräsentiert wird, die auf einer visuellen Schnittstelle (10) angezeigt werden, wobei das Computerprogrammprodukt einen computerlesbaren Datenträger (36) umfasst, auf dem Programmcode ausgeführt ist, der von einem Prozessor einer Datenverarbeitungsvorrichtung (2, 8) ausführbar ist, um das Verfahren nach einem der Ansprüche 1 bis 4 zu implementieren.

## Revendications

1. Un procédé de communication d'informations à un utilisateur concernant un état d'au moins une caractéristique dynamique de chaque objet, événement ou structure de données d'un ensemble d'objets, événements ou structures de données, la au moins une caractéristique dynamique possédant différents états discrets ou un éventail d'états, les objets, événements ou structures de données respectifs dudit ensemble d'objets, événements ou structures de données étant représentés par des composants respectifs (22) d'un ensemble (20) de composants similaires rendus sur une interface visuelle (10) ordonnés selon la au moins une caractéristique dynamique, chaque objet, événement ou structure de données possédant une valeur courante différente de la caractéristique dynamique, le procédé comprenant :
l'application à chaque composant (22) de l'ensemble (20) de composants similaires d'au moins une propriété variable représentant l'état de la caractéristique dynamique,
la détermination d'une variation dans l'état de la caractéristique dynamique pour chaque objet, événement ou structure de données,
la variation de la au moins une propriété variable pour chaque objet, événement ou structure de données en réponse à la variation dans l'état de la caractéristique dynamique représentée, où l'opération de variation est exécutée de manière continue sur l'éventail d'états ou de manière incrémentale pour chaque état discret différent de la caractéristique dynamique en réponse à la variation dans l'état de la caractéristique dynamique représentée, chaque incrément étant en réponse à l'atteinte d'un seuil respectif par l'état de la caractéristique dynamique représentée, et
le rendu de ladite opération de variation de la au moins une propriété variable sur l'interface visuelle (10).

2. Le procédé selon la revendication 1, où la détermination comprend la détection ou le calcul d'une valeur de l'état de la caractéristique dynamique.

3. Le procédé selon la revendication 1 ou 2, où le composant (22) comprend une pluralité de pixels, et la au moins une propriété variable comprend les couleurs d'au moins certains des pixels.

4. Le procédé selon la revendication 3, où l'opération de variation comprend au moins une des opérations suivantes : la modification de la teinte de chacun desdits au moins certains des pixels, la modification de la saturation de chacun desdits au moins certains des pixels, la modification de la luminosité de chacun desdits au moins certains des pixels, la modification de la transparence de chacun desdits au moins certains des pixels, et/ou la modification du contraste entre au moins certains des pixels.

5. Un appareil (2,8) destiné à communiquer des informations à un utilisateur concernant un état d'au moins une caractéristique dynamique de chaque objet, événement ou structure de données d'un ensemble d'objets, événements ou structures de données, la au moins une caractéristique dynamique possédant différents états discrets ou un éventail d'états, chaque objet, événement ou structure de données possédant une valeur courante différente de la caractéristique dynamique, l'appareil comprenant :
une interface visuelle (10) destinée à rendre des représentations d'objets, événements ou structures de données respectifs dudit ensemble d'objets, événements ou structures de données sous la forme de composants respectifs (22) d'un ensemble (20) de composants similaires ordonnés selon la au moins une caractéristique dynamique, l'état de la caractéristique dynamique étant représenté par au moins une propriété variable de chaque composant (22) de l'ensemble (20) de composants similaires, et
au moins un processeur (34) destiné à déterminer une variation dans l'état de la caractéristique dynamique de chaque objet, événement ou structure de données, et destiné à faire varier la au moins une propriété variable de chaque objet, événement ou structure de données en réponse à la variation dans l'état de la caractéristique dynamique représentée, où le processeur (34) est agencé de façon à exécuter l'opération de variation de manière continue sur l'éventail d'états ou de manière incrémentale pour chaque état discret différent de la caractéristique dynamique en réponse à la variation dans l'état de la caractéristique dynamique représentée, chaque incrément étant en réponse à l'atteinte d'un seuil respectif par l'état de la caractéristique dynamique représentée, et
l'interface visuelle (10) étant en outre agencée de façon à rendre ladite opération de variation de la au moins une propriété variable sur l'interface visuelle.

6. L'appareil selon la revendication 5, comprenant en outre un détecteur (38), où le processeur (34) est agencé de façon à recevoir un signal du détecteur destiné à détecter la variation dans l'état de la caractéristique dynamique de l'objet.

7. L'appareil selon la revendication 5, où le processeur (34) est agencé de façon à calculer la variation dans l'état de la caractéristique dynamique de l'objet.

8. L'appareil selon l'une quelconque des revendications 5 à 7, où le composant (22) comprend une pluralité de pixels, et la au moins une propriété variable comprend les couleurs d'au moins certains des pixels.

9. L'appareil selon la revendication 8, où le processeur (34) est agencé de façon à faire varier l'une quelconque des teintes ou une combinaison des teintes de chacun desdits au moins certains des pixels, à modifier la saturation de chacun desdits au moins certains des pixels, à modifier la luminosité de chacun desdits au moins certains des pixels, à modifier la transparence de chacun desdits au moins certains des pixels, et/ou à modifier le contraste entre au moins certains des pixels.

10. Un programme informatique destiné à communiquer des informations à un utilisateur concernant un état d'au moins une caractéristique dynamique de chaque objet, événement ou structure de données d'un ensemble d'objets, événements ou structures de données, chaque objet, événement ou structure de données étant représenté par un composant d'un ensemble (20) de composants similaires rendus sur une interface visuelle (10), ledit programme informatique comprenant un support lisible par ordinateur (36) contenant du code de programme exécutable par un processeur d'un dispositif informatique (2, 8) de façon à mettre en oeuvre le procédé selon l'une quelconque des revendications 1 à 4.
